# EUROPEAN PATENT SPECIFICATION

(11) **EP 3 621 768 B1**
(45) Date of publication and mention of the grant of the patent: **25.10.2023**
(21) Application number: 18711971.4
(22) Date of filing: 26.03.2018
(51) Int. Cl.: B23K 35/28, B23K 35/38, B23K 35/00, B23K 35/02, B32B 15/01, C22C 21/02, F28F 21/08

(54) **ALUMINIUM ALLOY HAVING HIGH-STRENGTH AT ELEVATED TEMPERATURE FOR USE IN A HEAT EXCHANGER**
ALUMINIUMLEGIERUNG MIT HOHER FESTIGKEIT BEI HOHER TEMPERATUR ZUR VERWENDUNG IN EINEM WÄRMETAUSCHER
ALLIAGE D'ALUMINIUM PRÉSENTANT UNE RÉSISTANCE ÉLEVÉE À HAUTE TEMPÉRATURE DESTINÉ À ÊTRE UTILISÉ DANS UN ÉCHANGEUR DE CHALEUR

(30) Priority: 09.05.2017 EP 17170044
(43) Date of publication of application: 18.03.2020
(73) Proprietor: Novelis Koblenz GmbH, 56070 Koblenz (DE)
(72) Inventor: BÜRGER, Achim, 56070 Koblenz (DE); JACOBY, Bernd, 56070 Koblenz (DE); KIRKHAM, Steven, 56070 Koblenz (DE)
(74) Representative: Weickmann & Weickmann PartmbB
(86) International application number: PCT/EP2018/057607
(87) International publication number: WO 2018/206193

(56) References cited:
- EP-B1- 2 129 520
- WO-A1-2008/155067
- WO-A2-2011/034496
- US-A- 4 098 957
- US-A1- 2002 142 185
- US-A1- 2015 101 787

## Description

### FIELD OF THE INVENTION

The invention relates to a wrought aluminium alloy ideally for use as core alloy in a brazing sheet product and having increased strength at elevated temperatures, for example at 260°C and at 300°C, and which aluminium alloy can be used for heat exchangers. Ideally, the wrought aluminium alloy according to the invention is provided as a rolled brazing sheet material, or as an extruded product for tubing for heat exchanger devices. Furthermore, the invention relates to a brazed assembly of components comprising at least one component of the aluminium alloy according to this invention.

### BACKGROUND TO THE INVENTION

Internal combustion diesel engine turbo chargers are operating and will operate at higher temperatures and pressures in order to meet increasing emissions restriction standards. In order to reduce the emissions, it is necessary to have a higher performance, which is normally obtained at a higher charge air cooler working temperature and pressure. Operating temperatures at the inlet of a charge air cooler may go up to a range of 180°C to 320°C while operating at a pressure in the range of 3.0 to 3.5 bar.

Hence, there appears to be a need for an aluminium alloy having a high strength in the post-braze condition, which high strength is maintained after being exposed for a substantial time to an elevated temperature, e.g. 260°C or even 300°C. It is desirable that high strength levels are combined with a good corrosion resistance, and ideally also with a good resistance against thermal fatigue.

Ideally, variants of the products also must be brazeable by a variety of brazing methods, most notably, vacuum and flux-based (e.g. CAB or Nocolok^{™}) brazing processes and fluxless CAB, in order to have as wide an application as possible.

Patent document WO 2008/110270 A1 (Aleris) discloses an aluminium alloy having high post-braze strength at elevated temperature for heat-exchangers and comprises a purposive addition of silver in an amount of 0.1% to 0.8%. The aluminium alloy comprises: Cu 0.5% to 2.2%, Mn 0.1% to 1.8%, Ag 0.1% to 0.8%, two or more selected from the group consisting of (Zr, Cr, Ti), and wherein 0.1%<(Cr+Zr+Ti)<1.5%, Mg up to 0.4%, Fe 0.05% to 0.6%, Si up to 0.5%, Zn up to 0.5%, other elements and impurities, balance aluminium.

Patent document WO 2011/034496 A2 (Sapa) discloses a multi-layered aluminium alloy brazing sheet consisting of: a core material that on either one or both sides has an intermediate layer consisting of an Al-Si braze alloy interposed between the core and a thin covering layer on top of the intermediate layer, where the said core material and the covering layer has a higher melting temperature than the Al-Si braze alloy. The disclosed core alloy consists of: Mn 0.5-2.0%, Cu up to 1.2%, Fe up to 1.0%, Si up to 1.0%, Ti up to 0.2%, Mg up to 2.5%, and Zr, Cr, V and/or Sc in total up to 0.2%, and unavoidable impurities in amounts less than 0.05% and a total impurity content of less than 0.2%, the balance consisting of aluminium. In this patent document, there is no disclosure concerning the post-braze strength levels nor about post-braze strength levels at elevated temperature. The role of the various alloying elements in the core alloy is not explained.

### SUMMARY OF THE INVENTION

As will be appreciated herein below, except as otherwise indicated, aluminium alloy designations and temper designations refer to the Aluminium Association designations in Aluminium Standards and Data and the Registration Records, as published by the Aluminium Association in 2016 and well known to the person skilled in the art.

For any description of alloy compositions or preferred alloy compositions, all references to percentages are by weight percent unless otherwise indicated. The term "up to" and "up to about", as employed herein, explicitly includes, but is not limited to, the possibility of zero weight-percent of the particular alloying component to which it refers. For example, up to 0.5% Zn may include an alloy having no Zn, and thus there may be an absence of such element.

For the purpose of this invention, and as used hereinafter, the term "controlled atmosphere brazing" or "CAB" refers to a brazing process which utilizes an inert atmosphere, for example, nitrogen or argon, in the brazing of the various alloy articles and is distinct from vacuum brazing in particular in that with CAB the brazing atmosphere in the furnace during the brazing operation is at about atmospheric pressure, although a slight under-pressure (for example, working at a pressure of 0.1 bar or more) or a slight over-pressure can be used to facilitate the control of the inert atmosphere and to prevent an influx of oxygen containing gas into the brazing furnace.

"Core" means an aluminium alloy which is the structural support for the aluminium alloy used as the filler. "Filler" means an aluminium-silicon alloy which is used to braze the core to other aluminium articles or component. "Fillet" means a concave joint between two surfaces.

It is an object of the invention to provide an aluminium alloy having increased post-braze strength after being exposed for a long period of time to an elevated temperature while displaying good post-braze corrosion resistance.

It is another object of the invention to provide an aluminium alloy having an increased post-braze yield strength after being exposed for at least 1,000 hours to a temperature of more than 260°C.

It is another object of the invention to provide an aluminium alloy having an increased post-braze yield strength after being exposed for at least 2,000 hours to a temperature of more than 260°C.

It is yet another object of the invention to provide an aluminium alloy having an increased post-braze yield strength after being exposed for at least 2,000 hours to a temperature of 300°C.

These and other objects and further advantages are met or exceeded by the present invention providing a wrought aluminium alloy or aluminium alloy product having high post-braze strength at elevate temperatures for use in heat-exchangers, the aluminium alloy comprising, in wt.%,

| | |
|---|---|
| Mn | about 0.5% to 1.8% |
| Cu | about 0.4% to 2.2% |
| Sc | about 0.01% to 0.6% |
| Zr | about 0.01% to 0.4% |
| Ag | up to about 0.6%, |

optional one or both of 0.03% to 0.5% Cr and 0.01% to 0.6% Ti,

| | |
|---|---|
| Mg | up to about 0.6% |
| Fe | up to about 0.7% |
| Si | up to about 0.8% |
| Zn | up to about 0.5%, |

impurities each <0.05%, total <0.20%, and balance aluminium,
wherein the combined addition of Sc and Zr is at least 0.22%.

The wrought aluminium alloy according to this invention offers an increased post-braze strength, typically of 40 MPa or more after being exposed for a long period of time, for example 1,000 or 2,000 hours or even longer at elevated temperature, for example 300°C, in combination with maintaining a high level of corrosion resistance when measured in a SWAAT test. The aluminium alloy can be used as the structural core in brazing sheet products as well as in extruded products, such as tubing. Variants of the products can be brazed by a variety of brazing methods, e.g., vacuum, and flux-based and fluxless CAB brazing processes.

### DETAILED DESCRIPTION OF PREFERRED EMBODIMENTS

The present invention provides a wrought aluminium alloy or wrought aluminium alloy product having high post-braze strength at elevate temperatures ideally for use in heat-exchangers, the aluminium alloy comprising, in wt.%,

| | |
|---|---|
| Mn | about 0.5% to 1.8%, preferably about 0.8% to 1.8%, |
| Cu | about 0.4% to 2.2%, preferably about 0.4% to 1.8%, |
| Sc | about 0.01% to 0.6%, preferably about 0.05% to 0.4%, |
| Zr | about 0.01% to 0.4%, preferably 0.03% to 0.2%, |
| Ag | up to about 0.6%, |

optional one or both of 0.03% to 0.5% Cr and 0.01% to 0.6% Ti,

| | |
|---|---|
| Mg | up to about 0.6%, preferably up to about 0.4%, |
| Fe | up to about 0.7%, preferably 0.05% to 0.4%, |
| Si | up to about 0.8%, preferably up to about 0.3%, |
| Zn | up to about 0.5%, |

impurities each <0.05%, total <0.20%, and balance aluminium,
wherein the combined addition of Sc and Zr is at least 0.22%.

In a preferred embodiment, the lower limit for the Mn content is about 0.8%, and more preferably about 1.0%. A preferred upper-limit for the Mn-content is about 1.7%. The Mn together with Cu contributes to increase the post-braze strength, and the Mn binds some of the Si present, thereby avoiding a low solidus temperature of the alloy product. However, if the Mn level is too high, there is an increasing risk of the formation of undesirable large intermetallic phases.

In a preferred embodiment, the lower limit for the Cu content is about 0.5%, and more preferably about 0.6%. A preferred upper-limit for the Cu-content is about 1.8%, and more preferably about 1.5%. In an embodiment, the upper-limit for the Cu-content is 1.25%. Cu is an important strengthening element in the alloy product according to this invention, but it has been found that a too high level may adversely affect the corrosion performance.

Together with the Cu and the Mn, the addition of scandium in combination with the Zr is an essential alloying element, and the Sc should be present in a range of about 0.01% to 0.5% to arrive at the improved strength properties in the post-braze condition at elevated temperatures. A preferred lower limit for the Sc is about 0.05%, and more preferably about 0.12%, and more preferably about 0.17%. A more preferred upper-limit is about 0.4%, and more preferably about 0.30%.

The aluminium alloy should contain also at least Zr in a range of about 0.01% to 0.4%. In an embodiment, the upper-limit for the Zr-content is about 0.3%, and more preferably about 0.2%. A preferred lower-limit for the Zr-content is about 0.06%, and more preferably about 0.08%.

In the aluminium alloy, one or both of 0.03% to 0.5% Cr and 0.01% to 0.6% Ti can optionally be present.

Each of Ti and Zr can combine with Sc to form a dispersoid which has a lower diffusivity than the Sc dispersoid alone and a reduced lattice mismatch between the dispersoid and aluminium matrix which results in a reduced coarsening rate. In the aluminium alloy according to the invention, there should be a combined addition of at least Sc and Zr in order to achieve the desired post-braze strength properties

The combined addition of Sc and Zr is at least 0.22%, and preferably at least 0.25%. In the better examples, the combined addition of Sc and Zr is at least 0.30%.
An additional advantage to adding Zr or Ti is that less Sc is required to obtain the same recrystallisation inhibiting effect. The sum of these three alloying elements Zr, Ti, and Cr, as far as present, should not exceed 1.2% because otherwise large intermetallic compounds are formed having an adverse effect on formability, post-braze strength and corrosion resistance. In a more preferred embodiment, and preferably when the stock for rolling or extrusion is made via regular Direct-Chill (DC) casting or techniques having similar solidification rates, the sum of these three elements should not exceed 0.9%, and preferably does not exceed 0.7%.

The addition of silver up to about 0.6% is optional to further enhance the post-braze properties of the aluminium alloy. In an embodiment, the aluminium alloy is Ag-free, meaning that it can be present at a level of less than about 0.05%, and preferably of less than about 0.02%.

The higher end of the Mn, Sc, Zr, Cr, Ti and Fe ranges can be used in particular when the alloy product is being manufactured using casting techniques having a relatively high cooling rate during the casting process such as with regular continuous casting techniques (e.g., slab casting, twin roll casting, belt casting, drag casting, etc.). Where the alloy is manufactured using ingot casting techniques such as regular DC-casting, the upper-limit for these elements should then preferably be set somewhat lower so as to avoid the formation of large detrimental intermetallics. Such intermetallics tie up considerable amounts of these alloying elements, rending a lower percentage available to contribute to the required engineering properties. In particular, large intermetallics have an adverse effect on formability, and they may hinder further down gauging of the product form. They can also have an adverse effect on the corrosion resistance. High solidification rates during casting are also desirable because they allow for the introduction of higher volume-fractions of fine dispersoids into the alloy. As such, thin ingots are more desirable than thicker ingots for Direct-Chill casting of the aluminium alloy. Continuous casting is further preferred in view of the higher solidification rates attained.

Depending on the brazing method applied, Mg can be present in the aluminium alloy or is preferably at a low level. In case the aluminium alloy or aluminium alloy product is used in a flux-based brazing process, the Mg content is preferably kept at a level of <0.1%, more preferably <0.05%. Whereas in a vacuum brazing process Mg can be present at higher levels, typically in a range of up to about 0.6%. In the embodiment where there is an interliner layer present between the core alloy made from the aluminium alloy according to the invention and the brazing material layer or filler, higher Mg content can be tolerated also when used in a flux-based brazing process. A more preferred upper-limit for the Mg-content is about 0.4%, and more preferably about 0.3%.

Preferably, Fe is in a range of about 0.05% to 0.6%. At too low of levels, the aluminium alloy is commercially less attractive, and some Fe is preferred for formability purposes. A preferred lower-limit for the Fe-content is about 0.07%, and more preferably about 0.1%. A preferred upper-limit for the Fe-content is about 0.4%.

Si is a regular element in aluminium alloys and can be present up to about 0.8%, and preferably up to about 0.5%, and more preferably up to about 0.3%. High Si levels in combination with the required Cu levels required for the aluminium alloy product leads to a too low solidus temperature.

Zn is not purposively added to the aluminium alloy according to this invention but can be tolerated without adversely affecting relevant properties to a level of up to about 0.5%. In a more preferred embodiment, the upper-limit for the Zn content is about 0.2%, and more preferably about 0.1%.

In the aluminium alloy product according to the invention, the balance is made by aluminium, and unavoidable impurities can be present each <0.05% and the total of impurities is <0.2%.

In an optional embodiment, one or more alloying elements from the group of V, Nb, Ta in a range of each up to about 0.40%, preferably up to about 0.25%, can be added to the aluminium alloy to increase the thermal stability of the aluminium alloy at elevated temperatures.

In a particular embodiment of the aluminium alloy it concerns a product having a composition consisting of, in wt.%:

| | |
|---|---|
| Mn | about 0.5% to 1.8%, preferably about 0.8% to 1.8%, |
| Cu | about 0.4% to 2.2%, preferably about 0.4% to 1.8%, |
| Sc | about 0.01% to 0.6%, preferably about 0.05% to 0.4%, |
| Zr | about 0.03% to 0.4%, preferably 0.03% to 0.2%, |
| Ag | up to about 0.6%, and preferably Ag-free, |

optional one or both of 0.03% to 0.5% Cr and 0.01% to 0.6% Ti,

| | |
|---|---|
| Mg | up to about 0.6%, preferably up to about 0.4%, |
| Fe | up to about 0.7%, preferably 0.05% to 0.4%, |
| Si | up to about 0.8%, preferably up to about 0.3%, |
| Zn | up to about 0.5%, |

impurities each <0.05%, total <0.20%, and balance aluminium,
wherein the combined addition of Sc and Zr is at least 0.22%,
and with preferred narrower compositional ranges as herein described and claimed.

In an embodiment of the aluminium alloy or aluminium alloy product according to this invention, it has a post-braze yield strength of 40 MPa or more, and preferably 45 MPa or more, and in the best examples 50 MPa or more after being exposed for 2,000 hours to a temperature of 300°C, and whereby the post-braze yield strength is also being measured at 300°C.

In an embodiment of the invention, the aluminium alloy is provided in the form of an extruded product, in particular as tubing or section, in particular suitable for application in a brazed product such as a heat-exchanger. This profile is often made by extruding a cast or worked shape such as a billet. The billet is subjected to the appropriate heating for extrusion, and is heat treated and/or quenched and/or aged in the appropriate way depending on the desired end properties. The tubing or section, either round or flat, or the like, can then be assembled with other components, e.g., tubes, headers, fins, side supports and the like, and subjected to a brazing cycle to interconnect the various pieces or components together into a unitary brazed assembly. The extruded product includes multi-void tubing, micro multi-void tubing, multi-port extruded tubes and multi-porthole tubes.

In another embodiment of the invention, the aluminium alloy is incorporated in a brazing sheet product comprising of a core alloy made from the aluminium alloy according to this invention and clad on one or both sides with a filler or brazing material layer, preferably a 4xxx-series aluminium brazing alloy and typically having Si in a range of 5 to 14% as its main alloying constituent. Typical filler alloys within this series are AA4343, AA4045, AA4047, AA4004, AA4104, AA4147, or some near compositional variants thereof. The 4xxx-series alloy may further contain one or more elements selected (in particular Zn, In, and/or Sn) in a concentration tailored to effect a desired electrochemical potential within and adjacent to a brazing joint or fillet.

In an embodiment, the filler or 4xxx-series brazing material alloy further contains one or more wetting elements, or elements modifying the surface tension of a molten Al-Si filler material to facilitate a brazing operation. Preferably, the elements are selected from the group comprising Bi, Y, Pb, Li, Na, Sb, Sr, and Th, and wherein the total amount of the wetting element(s) is in a range of about 0.01% to 0.8%. In a preferred embodiment, the upper-limit for the total amount of wetting element(s) is 0.5%.

It should also be noted that in products requiring that both outer surfaces be clad with a filler or brazing material, the most typical application would have similar fillers or brazing materials; however, the selection of the filler or brazing material alloy is dependent on the brazing method employed and the design of the final part being brazed.

In another embodiment of the invention, the core alloy and the clad filler or brazing material layer, preferably a 4xxx-series alloy, are separated by an interliner or an interlayer, such that the core is bonded to an interliner, and the interliner is, in turn, bonded to the 4xxx-series alloy. This multi-layered structure minimizes localized corrosion, promotes good brazeability, reduces liquid film migration, and, by suitable selection of the interliner alloy, enhances corrosion resistance, such that the interliner alloy sacrificially protects the underlying core alloy. Examples of suitable interliner alloys include aluminium alloys of the 1xxx-series, and 1xxx-series alloys having a purposive addition of Mg in a range of 0.1% to 1.5%, and 5xxx-series alloys having 0.1% to 1.5% Mg, and 3xxx-series alloys.

In an embodiment of the brazing sheet product, there is provided a core alloy bonded on both sides to an interliner, and each interliner is, in turn, bonded to a filler of a 4xxx-series aluminium alloy.

In another embodiment of the brazing product, there is provided an outerliner or waterside liner bonded on one side of the core alloy and a clad brazing material bonded to the other side of the core alloy. Optionally, there may be provided an interliner between the core alloy and the clad brazing material. The outerliner would generally be of an alloy tailored to provide high corrosion resistance or even corrosion combined with erosion resistance in the environment to which that face of the sheet is exposed. An example of a suitable outerliner would be an aluminium alloy having a purposive addition of Zn, such as, for example, an AA7072-series alloy. In addition, an alloy can be used having a purposive addition of Mg to increase the strength of the outerliner such that the outerliner may contribute to the overall post-braze strength of the brazing sheet product. Further, the combined addition of Zn and Mg would be a good consideration.

The thickness of the core layer (in percent compared to the total thickness of a brazing sheet product) is preferably in a range of about 60% to 90%, the thickness of the interliner or interlayer or outerliner or waterside liner (in percent compared to the total thickness of the brazing sheet) is preferably in a range of about 5% to 25%, and the thickness of the filler or brazing material layer is preferably (in percent compared to the total thickness of the brazing sheet) in a range of about 4% to 20%. The thickness of the core alloy at final clad composite gauge can be as little as about 70 microns to as much as about 4 mm.

The brazing sheet or tubing is preferably provided in a fully-annealed "O" temper, or in an H1X-temper, e.g. H111, H2X-temper, e.g. H24, or H3X-temper.

For the brazing sheet product according to this invention, the various layers can be bonded in various manners, for example, by roll bonding as is well-known in the art or by casting together the core and the next layer, either the brazing material or the interliner as the case may be, for example by the manufacturing process disclosed in WO 2004/112992 or partially or completely fabricated via a casting process according to US 6,705,384. Both cited patent documents are entirely incorporated herein by reference.

In a further aspect of the invention, it relates to a method of use of the aluminium alloy or aluminium alloy product in a brazed assembly of components (e.g. components like plates, headers, side supports, tubes, fins, etc.), the brazed assembly having at least partially a service temperature of 200°C or more, more preferably of 250°C or more, for example at the inlet of the brazed assembly.

In a further aspect of the invention, there is provided a brazed heat-exchanger incorporating at least partially a component made from the aluminium alloy according to this invention. A typical example of a heat-exchanger benefiting from the aluminium alloy according to this invention having increased post-braze strength at elevated temperatures is a direct air charge-air-cooler ("CAC") or water cooled charge-air-cooler ("CAC") or exhaust gas cooler.

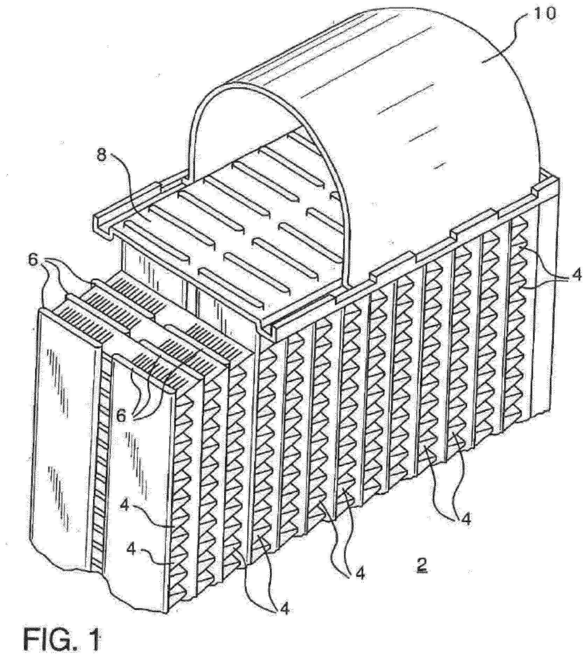

Fig. 1 is an isometric view of a portion of a brazed heat exchanger.

As shown in Fig. 1, a brazed aluminium heat exchanger 2 in accordance with the present invention includes a plurality of fluid-carrying tubes 6. The ends of the fluid-carrying tubes 6 are open to a header plate 8 and a tank 10 (one end of the fluid-carrying tubes 6, one header plate 8 and one tank 10 are shown in Fig.1). Coolant is circulated from the tank 10, through the fluid-carrying tubes 6 and into another tank (not shown). As shown, a plurality of cooling fins 4 are disposed between the fluid-carrying tubes 6, in order to transfer heat away therefrom thereby facilitating a heat exchange cooling the fluid therein.

The invention will now be illustrated with reference to non-limiting examples according to the invention, which is limited by appended claims 1-15.

### EXAMPLES

### Example 1.

On a laboratory scale, seven different aluminium core alloys were cast to illustrate the principle of the current invention. The core alloys were tested for their strength development in a non-clad condition. The core alloy compositions are in listed Table 1. For all core ingots, the balance was inevitable impurities and aluminium. Alloy 7 is according to the present invention, whereas alloys 1 to 6 are from WO 2008/110270, and wherein alloys 4 and 6 were according to the invention disclosed in this referenced patent document.

For each core alloy tested, two variants were manufactured, namely a homogenised core to produce an O-temper product and a non-homogenised core to produce a product in the H24 temper. The O-temper processing route involved a homogenisation treatment for 10 hours at 600°C, then preheating for about 2 hours at 430°C, then hot rolling to 5 mm, then cold rolling to 0.5 mm, then end-annealing for 3 hours at about 350°C. The H24-temper processing route involved preheating for about 2 hours at 430°C, then hot rolling to 5 mm, then cold rolling to 0.5 mm, and then end-annealing for 3 hours at about 320°C.

Thereafter, all sheet products were subjected to a simulated brazing cycle by holding the sheets for 3 min at a temperature of 590°C. Tensile properties have been measured in a tensile test according to NEN10.002 for measurements at room temperature and according to ASTM E21-09 for the measurements at elevated temperatures. The strength has been measured in the pre-brazed condition, in the post-brazed condition after 14 days natural ageing at ambient temperature (T4 condition), and in the post-brazed condition after 14 days natural ageing at ambient temperature followed by 8 hours at 300°C (T4 over-aged condition). The tensile properties at room temperature are listed in Tables 2 and 3, and those carried out at 300°C are listed in Table 4.

**Table 1. The chemical composition, in wt.%, of the core alloys tested.**

| **Alloy** | **Alloying element** | | | | | | | | |
|---|---|---|---|---|---|---|---|---|---|
| | **Fe** | **Si** | **Mn** | **Cu** | Mg | **Zr** | Ag | **Ti** | **Sc** |
| **1** | 0.25 | 0.15 | 1.48 | 0.81 | - | - | - | - | - |
| **2** | 0.26 | 0.15 | 1.6 | 0.81 | - | 0.18 | - | - | - |
| **3** | 0.26 | 0.15 | 1.5 | 0.82 | - | 0.12 | - | 0.25 | - |
| **4** | 0.25 | 0.15 | 0.29 | 1.7 | 0.27 | 0.19 | 0.32 | 0.6 | - |
| **5** | 0.25 | 0.16 | 0.31 | 1.7 | - | 0.19 | 0.26 | - | - |
| **6** | 0.26 | 0.15 | 0.34 | 1.7 | - | 0.19 | 0.29 | 0.53 | |
| **7** | 0.25 | 0.15 | 1.6 | 0.81 | - | 0.14 | - | - | 0.23 |

**Table 2. Yield strength (YS) in MPa and measured at room temperature of the various core alloys in the O-temper and H24-temper in the pre-braze, post-braze, and post-braze over-aged condition.**

| **Alloy** | **Pre-brazed** | | **Post-brazed T4** | | **Post-brazed T4 over-aged** | |
|---|---|---|---|---|---|---|
| | **O** | **H24** | **O** | **H24** | **O** | **H24** |
| **1** | 62 | 203 | 55 | 59 | 50 | 56 |
| **2** | 125 | 223 | 56 | 61 | 52 | 59 |
| **3** | 137 | 213 | 55 | 63 | 52 | 59 |
| **4** | 83 | 208 | 127 | 127 | 88 | 79 |
| **5** | 57 | 193 | 55 | 60 | 62 | 72 |
| **6** | 61 | 181 | 57 | 61 | 71 | 72 |
| **7** | 77 | 255 | 70 | 113 | 121 | 122 |

**Table 3. Tensile strength (UTS) in MPa and measured at room temperature of the various core alloys in the O-temper and H24-temper in the pre-braze, post-braze, and post-braze over-aged condition.**

| **Alloy** | **Pre-brazed** | | **Post-brazed T4** | | **Post-brazed T4 over-aged** | |
|---|---|---|---|---|---|---|
| | **O** | **H24** | **O** | **H24** | **O** | **H24** |
| **1** | 163 | 240 | 154 | 161 | 150 | 153 |
| **2** | 182 | 257 | 159 | 167 | 153 | 160 |
| **3** | 187 | 252 | 163 | 168 | 157 | 160 |
| **4** | 177 | 241 | 269 | 269 | 205 | 199 |
| **5** | 146 | 216 | 166 | 158 | 167 | 163 |
| **6** | 152 | 204 | 168 | 170 | 181 | 177 |
| **7** | 178 | 296 | 178 | 202 | 202 | 195 |

**Table 4. Post-braze yield strength (in MPa) and post-braze tensile strength (in MPa) for multi-layered brazing sheet products in O-temper and H24-temper measured at a temperature of 300°C after 3 months at a temperature of 300°C.**

| **Alloy** | **After 3 months at 300°C** | | | |
|---|---|---|---|---|
| | **O-temper** | | **H24-temper** | |
| | **YS** | **UTS** | **YS** | **UTS** |
| **4** | 50 | 60 | 47 | 64 |
| **5** | 35 | 45 | 45 | 51 |
| **6** | 44 | 55 | 48 | 55 |
| **7** | 47 | 54 | 52 | 70 |

From the results of Table 2 and 3, it can be seen that alloy 7 has significantly higher strength than comparative alloys 1 to 3 in long-term and over-aged testing.

Furthermore, alloy 7 has similar or even better yield strength, in particular after post-braze ageing, than the Ag-containing alloys 4 and 6 known from patent document WO 2008/110270. The tensile strength of alloy 7 is in the same range as alloys 4 and 6.

From a comparison between alloy 2 and alloy 7, it can be seen that the combined addition of Sc and Zr (alloy 7) instead of only Zr (alloy 2) leads to a significant increase in post-braze strength, in particular in the post-braze T4 and the post-braze T4 over-aged condition.

Further, it can be seen from Table 4 that alloy 7 both in O-temper and H24 temper provides higher strength levels, both for YS and UTS, after being exposed at 300°C for 3 months. For reference, this performance compares for a conventional brazing 3xxx series alloy to a post-braze 300°C expose test result of 40 MPa for O-temper and 42-46 MPa for H24-temper material. This together makes the aluminium alloy at least an alternative alloy for the Ag-containing alloys known from WO 2008/110270 and forms an ideal candidate for use as core alloy, both in the form of sheet and tube, forming the structural material in a brazed assembly requiring a high post-braze strength at elevated temperature while maintaining a very good corrosion resistance.

Having now fully described the invention, it will be apparent to one of ordinary skill in the art that many changes and modifications can be made without departing from the scope of the appended claims.

## Claims

1. Aluminium alloy having high post-braze strength at elevate temperatures for heat-exchangers, the aluminium alloy comprising, in wt.%,
| | |
|---|---|
| Mn | 0.5% to 1.8%, |
| Cu | 0.4% to 2.2%, |
| Sc | 0.01% to 0.6%, |
| Zr | 0.01% to 0.4%, |
| Ag | up to 0.6%, |
optional one or both of 0.03% to 0.5% Cr and 0.01% to 0.6% Ti,
| | |
|---|---|
| Mg | up to 0.6%, |
| Fe | up to 0.7%, |
| Si | up to 0.8%, |
| Zn | up to 0.5%, |
impurities each <0.05%, total <0.20%, and balance aluminium, wherein the combined addition of Sc and Zr is at least 0.22%.

2. Aluminium alloy according to claim 1, wherein from Cu-content is in a range of 0.4% to 1.8%, and preferably 0.5% to 1.5%.

3. Aluminium alloy according to claim 1 or 2, wherein the Mn-content is in a range of 0.8% to 1.8%, and preferably 1.0% to 1.8%.

4. Aluminium alloy according to any one of claims 1 to 3, wherein the Sc-content is in a range of 0.04% to 0.5%, and preferably in a range of 0.05% to 0.4%.

5. Aluminium alloy according to any one of claims 1 to 4, wherein the Zr-content is in a range of 0.03% to 0.2%.

6. Aluminium alloy according to any of one of claims 1 to 5, wherein the alloy is Ag-free, and preferably <0.05%.

7. Aluminium alloy according to any of one of claims 1 to 6, wherein the combined addition of Sc and Zr is at least 0.25%, and preferably at least 0.30%.

8. Aluminium alloy according to any one of claims 1 to 7, having a yield strength of 40 MPa or more, preferably 45 MPa or more, after exposure for 2,000 hours to a temperature of 300°C and measured at 300°C.

9. Aluminium alloy according to any one of claims 1 to 8, and wherein the aluminium alloy being in a temper selected from the group of O-temper, H1x temper, H2x-temper, and H3x temper.

10. Extruded product for a heat-exchanger, wherein the extruded product is made from the aluminium alloy according to any one of claims 1 to 9.

11. Extruded product according to claim 10, wherein the extruded product is in the form of a tube.

12. An aluminium brazing sheet product for heat-exchangers, comprising of a core alloy made from the aluminium alloy according to any one of claims 1 to 9, and clad on one or both faces with a brazing material layer, preferably made of a 4xxx-series aluminium brazing alloy.

13. An aluminium brazing sheet product for heat-exchangers, comprising of a core alloy made from the aluminium alloy according to any one of claims 1 to 9, and bonded on at least one face to an aluminium alloy interliner material layer which, in turn, is bonded on its outerface to a brazing material layer, preferably made of a 4xxx-series aluminium brazing alloy.

14. A brazed heat-exchanger device incorporating a component made from an aluminium alloy according to any one of claims 1 to 13.

15. A brazed direct air or water cooled charge air cooler incorporating a component made from an aluminium alloy according to any one of claims 1 to 13.

## Patentansprüche

1. Aluminiumlegierung mit hoher Festigkeit nach einem Löten bei erhöhten Temperaturen für Wärmetauscher, wobei die Aluminiumlegierung, in Gew.%, umfasst:
| | |
|---|---|
| Mn | 0,5% bis 1,8%, |
| Cu | 0,4% bis 2,2%, |
| Sc | 0,01% bis 0,6%, |
| Zr | 0,01% bis 0,4%, |
| Ag | bis 0,6%, |
gegebenenfalls eines oder beide von 0,03% bis 0,5% Cr und 0,01% bis 0,6% Ti,
| | |
|---|---|
| Mg | bis 0,6%, |
| Fe | bis 0,7%, |
| Si | bis 0,8%, |
| Zn | bis 0,5%, |
Verunreinigungen jeweils <0,05%, insgesamt <0,20%, und Rest Aluminium, wobei die kombinierte Zugabe von Sc und Zr mindestens 0,22% beträgt.

2. Aluminiumlegierung nach Anspruch 1, wobei der Cu-Gehalt in einem Bereich von 0,4% bis 1,8% und vorzugsweise 0,5% bis 1,5% liegt.

3. Aluminiumlegierung nach Anspruch 1 oder 2, wobei der Mn-Gehalt in einem Bereich von 0,8% bis 1,8% und vorzugsweise 1,0% bis 1,8% liegt.

4. Aluminiumlegierung nach einem der Ansprüche 1 bis 3, wobei der Sc-Gehalt in einem Bereich von 0,04% bis 0,5% und vorzugsweise in einem Bereich von 0,05% bis 0,4% liegt.

5. Aluminiumlegierung nach einem der Ansprüche 1 bis 4, wobei der Zr-Gehalt in einem Bereich von 0,03% bis 0,2% liegt.

6. Aluminiumlegierung nach einem der Ansprüche 1 bis 5, wobei die Legierung Ag-frei und vorzugsweise < 0,05% ist.

7. Aluminiumlegierung nach einem der Ansprüche 1 bis 6, wobei die kombinierte Zugabe von Sc und Zr mindestens 0,25% und bevorzugt mindestens 0,30% beträgt.

8. Aluminiumlegierung nach einem der Ansprüche 1 bis 7, mit einer Streckgrenze von 40 MPa oder mehr, vorzugsweise 45 MPa oder mehr, nachdem sie 2.000 Stunden einer Temperatur von 300°C ausgesetzt und bei 300°C gemessen wurde.

9. Aluminiumlegierung nach einem der Ansprüche 1 bis 8, und wobei die Aluminiumlegierung in einem Temper vorliegt, der aus der Gruppe von O-Temper, H1x-Temper, H2x-Temper und H3x-Temper ausgewählt ist.

10. Extrudiertes Produkt für einen Wärmetauscher, wobei das extrudierte Produkt aus der Aluminiumlegierung nach einem der Ansprüche 1 bis 9 hergestellt ist.

11. Extrudiertes Produkt nach Anspruch 10, wobei das extrudierte Produkt in der Form eines Rohrs ist.

12. Aluminium-Lötblechprodukt für Wärmetauscher, umfassend eine Kernlegierung hergestellt aus der Aluminiumlegierung nach einem der Ansprüche 1 bis 9 und auf einer oder beiden Seiten mit einer Lötmaterialschicht plattiert, vorzugsweise hergestellt aus einer Aluminiumlötlegierung der 4xxx-Serie.

13. Aluminium-Lötblechprodukt für Wärmetauscher, umfassend eine Kernlegierung hergestellt aus der Aluminiumlegierung nach einem der Ansprüche 1 bis 9 und auf mindestens einer Seite mit einer Zwischenmaterialschicht aus einer Aluminiumlegierung verbunden, die wiederum an ihrer Außenseite mit einer Lötmaterialschicht verbunden ist, die vorzugsweise aus einer Aluminiumlötlegierung der 4xxx-Reihe hergestellt ist.

14. Gelötete Wärmetauschervorrichtung, die eine Komponente, hergestellt aus einer Aluminiumlegierung nach einem der Ansprüche 1 bis 13, enthält.

15. Gelöteter, direkt luft- oder wassergekühlter Ladeluftkühler, der eine Komponente, hergestellt aus einer Aluminiumlegierung nach einem der Ansprüche 1 bis 13, enthält.

## Revendications

1. Alliage d'aluminium ayant une résistance élevée après brasage à des températures élevées pour les échangeurs de chaleur, l'alliage d'aluminium comprenant, en % en poids,
Mn 0,5 % à 1,8 %,
Cu 0,4 % à 2,2 %,
Sc 0,01 % à 0,6 %,
Zr 0,01 % à 0,4 %,
Ag jusqu'à 0,6 %,
optionnellement l'un ou les deux de 0,03 % à 0,5 % Cr et 0,01 % à 0,6 % Ti,
Mg jusqu'à 0,6 %,
Fe jusqu'à 0,7 %,
Si jusqu'à 0,8 %,
Zn jusqu'à 0,5 %,
impuretés chacune < 0,05 %, total < 0,20 %, et aluminium d'équilibre, dans lequel l'addition combinée de Sc et de Zr est d'au moins 0,22 %.

2. Alliage d'aluminium selon la revendication 1, dans lequel la teneur en Cu est comprise entre 0,4 % et 1,8 %, et de préférence entre 0,5 % et 1,5 %.

3. Alliage d'aluminium selon la revendication 1 ou 2, dans lequel la teneur en Mn est comprise entre 0,8 % et 1,8 %, et de préférence entre 1,0 % et 1,8 %.

4. Alliage d'aluminium selon l'une des revendications 1 à 3, dans lequel la teneur en Sc est comprise entre 0,04 % et 0,5 %, et de préférence entre 0,05 % et 0,4 %.

5. Alliage d'aluminium selon l'une des revendications 1 à 4, dans lequel la teneur en Zr est comprise entre 0,03 % et 0,2 %.

6. Alliage d'aluminium selon l'une des revendications 1 à 5, dans lequel l'alliage est exempt d'Ag, et de préférence < 0,05 %.

7. Alliage d'aluminium selon l'une des revendications 1 à 6, dans lequel l'addition combinée de Sc et de Zr est d'au moins 0,25 %, et de préférence d'au moins 0,30 %.

8. Alliage d'aluminium selon l'une des revendications 1 à 7, ayant une limite d'élasticité supérieure ou égale à 40 MPa, de préférence supérieure ou égale à 45 MPa, après une exposition de 2000 heures à une température de 300 °C et mesurée à 300 °C.

9. Alliage d'aluminium selon l'une des revendications 1 à 8, et dans lequel l'alliage d'aluminium est dans un état choisi dans le groupe des états O, H1x, H2x et H3x.

10. Produit extrudé pour un échangeur de chaleur, dans lequel le produit extrudé est fabriqué à partir de l'alliage d'aluminium selon l'une des revendications 1 à 9.

11. Produit extrudé selon la revendication 10, dans lequel le produit extrudé se présente sous la forme d'un tube.

12. Tôle à braser en aluminium pour échangeurs de chaleur, comprenant un noyau en alliage d'aluminium selon l'une des revendications 1 à 9, et revêtu sur une ou deux faces d'une couche de matériau de brasage, de préférence en alliage de brasage d'aluminium de la série 4xxx.

13. Tôle à braser en aluminium pour échangeurs de chaleur, comprenant un alliage central fabriqué à partir de l'alliage d'aluminium selon l'une des revendications 1 à 9, et lié sur au moins une face à une couche de matériau intercalaire en alliage d'aluminium qui, à son tour, est liée sur sa face extérieure à une couche de matériau de brasage, de préférence en alliage d'aluminium de la série 4xxx.

14. Dispositif d'échangeur de chaleur brasé incorporant un composant fabriqué à partir d'un alliage d'aluminium selon l'une des revendications 1 à 13.

15. Refroidisseur d'air de suralimentation brasé, refroidi directement à l'air ou à l'eau, incorporant un composant fabriqué à partir d'un alliage d'aluminium selon l'une des revendications 1 à 13.
